# EUROPEAN PATENT SPECIFICATION

(11) **EP 0 880 752 B1**
(45) Date of publication and mention of the grant of the patent: **21.07.1999**
(21) Application number: 97900259.9
(22) Date of filing: 06.01.1997
(51) Int. Cl.: G06K 11/08

(54) **A METHOD AND SYSTEM FOR DETERMINING THE POINT OF CONTACT OF AN OBJECT WITH A SCREEN**
VERFAHREN UND VORRICHTUNG ZUR BESTIMMUNG DES KONTAKTPUNKTES EINES OBJEKTS AUF EINEM SCHIRM
PROCEDE ET SYSTEME POUR DETERMINER LE POINT DE CONTACT D'UN OBJET AVEC UN ECRAN

(30) Priority: 16.02.1996 GB 9603330
(43) Date of publication of application: 02.12.1998
(73) Proprietor: THOMSON TRAINING & SIMULATION LIMITED, Crawley, Sussex RH10 2RL (GB)
(72) Inventor: BRIDGWATER, Raymond, John, Worthing Sussex BN11 5QS (GB)
(74) Representative: Holmes, Matthew Peter
(86) International application number: GB9700006
(87) International publication number: WO9730416

(56) References cited:
- EP-A- 0 613 079
- DE-A- 3 932 508
- US-A- 4 561 017
- ICASSP '82 PROCEEDINGS, vol. 7, no. 2, May 1982, PARIS, FR, pages 818-820, XP002029733 MEHTA ET AL: "FEATURE EXTRACTION AS A TOOL FOR COMPUTER INPUT"

## Description

The present invention relates to a method and system for determining the point of contact of an object with a screen. Particularly, but not exclusively, the invention relates to a touch sensitive data input system.

There exist many different mechanisms for inputting data to computer based systems, such as keyboards, "mouse" devices, trackballs, joy sticks and touch sensitive devices. Known touch sensitive input devices, generally referred to as "touchscreens", are based on a variety of different technologies, the most common of which are discussed below. In all cases, a touch sensitive screen assembly is used in conjunction with the system display device, the location of a touch (by finger or other object) on the screen indicating the data to be input to the system.

One common form of known touchscreen device utilises capacititive overlay technology. In such devices the display unit is provided with a glass overlay screen which is coated with a thin transparent conductor layer and the finger (or other object used to touch the screen) capacitance is sensed to determine the touch location (and thus the input data). That is, touching the overlay screen with a finger produces a capacititive coupling with the conductive layer, resulting in current flow to the finger. The current flow to the finger from each corner of the screen is proportional to the distance from each corner to the point of contact of the finger with the screen. The screen co-ordinates of the point of contact can thus be obtained by measuring the ratios of the currents at each corner of the screen.

Capacititive overlay devices are capable of high resolution but suffer from drift and thus require periodic calibration. In addition, the conductive layer reduces the transmissivity of the screen to around 85% to 90%. Furthermore, a conductive stylus is required to touch the screen and thus the device would not necessarily work when touched with a gloved finger. A further disadvantage of capacititive overlay devices is that they are not capable of discriminating between two separate but simultaneous touches (in such circumstances the average of the two touch positions will be calculated).

In another known type of touchscreen device, known as "force vector" devices, the display device is mounted on a base which measures force applied to the device (by touching the device with a finger or other object) in three degrees of freedom. The measured components of the applied force can be resolved to determine the location at which the force is applied to the screen. Such devices cannot, however, achieve particularly high resolution and are unable to discriminate between simultaneous forces applied at more than one location. In addition, calibration of this type of device is complex and time consuming and periodic checks are necessary.

In an alternative device, a rigid glass screen is mounted at each corner via strain gauges (for example piezoelectric transducers). Touching the screen at any given location will cause different forces to be measured at each of the strain gauges from which the location of the touch can be determined using a suitable algorithm. Although high resolution can be achieved with such devices, calibration is complex and time consuming and, since drift is a problem, periodic calibration is required. Moreover, as with the above touchscreens, devices of this type cannot discriminate between more than one touch location.

There are also known touchscreens which utilise resistive overlay technology. Such devices essentially comprise an overlay screen of sandwich construction having a rigid glass backing sheet separated from a top flexible plastics (for example polyester) cover sheet by spaced insulators. Both the glass backing sheet and plastics cover sheet are coated with a thin transparent metallic layer such that the two layers face each other (being separated by the insulators). The arrangement is such that touching the cover sheet presses the two metallic layers together to form a conductive path at the point of contact. With a voltage applied across the two metallic layers, the ratio of the resistances from the point of contact to the top and bottom edges and each side edge of the screen can be calculated to determine the location of the point of contact. Such devices offer high resolution but have the disadvantage that the overlay structure is relatively complicated. In addition, the transmissivity of such devices can only be expected to be in the region of 50% and 75%, and reflection and glare can be a problem. Resistive overlay devices also suffer from drift as a result of which periodic calibration is required. Furthermore, resistance overlay devices are not suited to discriminating multiple contact points.

Other examples of known touch screens utilise acoustic wave technology. In one such type of device, known as a guided wave device, acoustic waves are transmitted through a glass sheet from edge to edge using edge mounted transmitters and receivers. Touching the sheet at any particular location results in localised attenuation of the acoustic signal. This attenuation can be detected and used to compute the touch position. However, the transmissivity of such devices is only about 90% and they suffer the additional potential disadvantage that a soft, energy absorbent, stylus (such as a finger) must be used. Again, with such devices it is difficult to discriminate multiple touch points.

As a variation of the above guided acoustic wave devices, devices exist in which acoustic waves are transmitted across the surface of a glass screen as opposed to through the screen. Such devices have similar disadvantages to guided acoustic wave devices and provide lower resolution.

Finally, scanning infra-red devices are known, which comprise multiple infra-red emitters and detectors located along the top and bottom and each side respectively of the screen. The emitters are pulsed sequentially to form an invisible grid overlaying the screen so that touching the screen interrupts one or more infra-red beams from which the location of the touch can be determined. Such devices suffer from the disadvantage that emitters and detectors have to be arranged along the edges of the display and that resolution is limited to the number of emitters and detectors provided. Parallax can also be a problem since the infra-red beams are displaced from the surface of the screen. With such devices it is difficult to determine between two separate touch points, unless the touch points are clearly separated in both the x and y directions (close proximity in either x or y direction can result in an ambiguous readout).

US-A-4 561 017 describes a system using a large prism, the largest face of which forms a drawing surface, and which is viewed obliquely by a camera via another surface so as to rely on total internal reflection at the drawing surface. A modification of the characteristics of the drawing surface by the addition of an object or objects, to allow transmission through the surface, produces an image on the surface which is viewed by the camera.
This system is based on the effect of total internal reflection and is thus completely different from the present invention.

DE-A-3 932 508 describes a non-mechanical key board entry device, which discriminates position in a similar manner to a mechanical key board. That is, if your finger is anywhere on a keypad the key operates, i.e. there is no "measurement" of finger position. rather there is an course quantisation of finger position which is adequate for the intended purpose. This document contains no disclosure or suggestion of the use of a diffusing screen, and indeed a diffusing screen could not be used in place of the transparent medium touched by a finger since this would result in a signal being generated at each light receiver whenever the associated light transmitter is pulsed, irrespective of whether a finger is present or not, thereby completely removing the ability to discriminate the touch of a finger in the vicinity of a sampling area or "key".

The document ICASSP '82 Proceedings, vol. 7, no. 2, May 1982, Paris, FR, pages 818-820, XP002029733 Mehta et al: "Feature extraction as a tool for computer input" discloses an apparatus which does not have a source of illumination equivalent to the source 3 in Fig 1 for irradiating said opposite side of the screen to said to first side. This document uses ambient light which irradiates said first side, and detects the darkness created by objects on the inputting surface. EP-A-0613079 operates on a similar basis using an illumination means which is "obscured" by the object. The obscured image is detected by the camera. Again, the input surface is not "back" illuminated but "front" illuminated.

It is an object of the present invention to obviate or mitigate at least some of the disadvantages discussed above.

According to a first aspect of the present invention there is provided a method for determining the location of the or each point of contact of one or more objects with a first side of an at least partially transparent diffusing screen, the method comprising:
(i) illuminating the opposite side of the screen to said first side with radiation;
(ii) monitoring the radiation reflected from the screen and from any object placed in contact with said first side of the screen and producing a signal representative of the monitored image; and
(iii) processing said monitored image signal to determine the screen co-ordinates of the or each point of contact of an object with the screen.

The term "radiation" is used above (and hereinafter) in a general sense to cover any radiation for which the screen is at least partially transparent and which may be reflected by a suitable object contacting said first side of the screen. It is, however, preferred that infra-red radiation having a frequency of the order of 4 x 10¹⁴Hz to 3 x 10¹¹Hz is used.

The present invention thus provides a method for determining the location at which a screen is touched which offers a number of potential advantages over the prior art discussed above, when used as part of a data inputting system. For instance, using conventional image processing methods and hardware, it is relatively straightforward to discriminate between multiple simultaneous points of contact with the screen. In addition, the method is not limited to detection of certain types of object (eg conductive or energy absorbent styluses as in the case of some of the prior art devices discussed above) and thus can be used to detect touching of the screen by any object, including a finger (gloved or otherwise).

A further advantage of the above method is that it does not require a screen of complex construction. For instance, the method is particularly suited for use in conjunction with a back projection visual display system in which the screen is a simple difusing screen. It will readily be appreciated that because the screen need not be of any special construction, the method is particularly useful for use in conjunction with large screen display systems. A further advantage of the simple screen structure (for instance not requiring conductive coatings etc) is that the screen may have a high transmissivity.

By appropriate choice of the equipment used to monitor the reflected infra-red radiation (for instance one or more television cameras) and image processing (i.e. (step iii) above), the method can provide high resolution.

The central feature of the invention is the use of radiation, and in particular the reflection of radiation from the screen, as a basis for determining the point (or points) at which the screen is touched. The image processing step may vary considerably depending upon the system in which the method is used and the information required.

For instance in a preferred method according to the present invention, the processing step (iii) includes the step of subtracting a representation of the background radiation reflected by the screen from the signal representative of the monitored image to derive a signal representative of localised highlights resulting from contact of the or each object with the screen.

Preferably the processing step (iii) further includes the step of thresholding the signal representative of detected infra-red highlights.

The processing step (iii) may further include performing region of interest calculations to determine both the screen co-ordinates and size of the or each point of contact of an object with the screen, and to discriminate between multiple points of contact.

As touched upon above, the described method may be used in a variety of applications. The method is, however, particularly suited for use with a screen (such as, for example, a diffusing back projection screen) which is part of a visual display system and wherein said method forms part of a method for inputting data to the systems processor in response to touching the screen, the data input to the system processor being dependent on the location of the or each point at which the screen is touched.

According to a second aspect of the present invention there is provided a system for determining the point of contact of an object with a first side of an at least partially transparent diffusing screen, the system comprising a radiation source for illuminating the opposite side of the screen to said first side, at least one radiation detecting means for monitoring the radiation reflected from the screen and from any object placed in contact with said first side of the screen, and for producing a signal representative of the monitored image, and signal processing means for processing the signal representative of the monitored image to determine the screen co-ordinates of the or each point of contact of an object with the screen.

The signal processing means is preferably an image processor which stores a background image of the background radiation reflected from the screen and subtracts this from the monitored image to produce a signal representative of monitored radiation highlights of reflected radiation from the or each object placed in contact with the screen.

The image processor may include thresholding circuitry.

In a preferred embodiment of the invention the image processor includes cluster analysis circuitry which receives a signal from the thresholding circuitry and which produces a signal representative of the screen co-ordinates of the or each point of contact of an object with the screen. The cluster analysis circuitry may be adapted to determine the size of the or each point of contact of an object with the screen. In addition, further processing means may be provided to eliminate from the signal output from the cluster analysis circuitry components representative of points of contact below a minimum size. Similarly, processing means may be provided to eliminate from the signal components representative of points of contact above a pre-determined maximum size.

The system is particularly suited for use in conjunction with a screen of a visual display system, such as a back projection system.

According to a third aspect of the present invention there is provided a visual display system, comprising a diffusion back projection screen, and a system as described above for determining the screen co-ordinates of the or each point of contact of an object with the screen.

The system may include an image projector which also functions as the radiation source.

A specific embodiment of the present invention will now be described, by way of example only, with reference to the accompanying drawings, in which:
Figure 1 is a schematic illustration of a visual display and data input system in accordance with the present invention; and
Figure 2 is a block diagram schematically illustrating the image processing steps of the system of Figure 1.

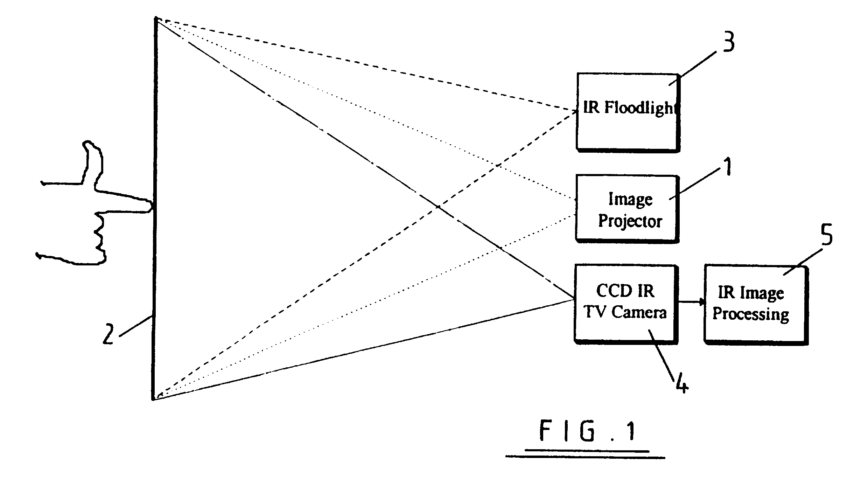

Referring to Figure 1, the schematically illustrated embodiment of the present invention is a back projection display system. The image display part of the system comprises an image projector 1 and a diffusing back projection screen 2. The system is designed so that data can be input into the system by touching the screen 2 (on the opposite side thereof to the projector 1) at one or more appropriate locations. The touch location(s) may, for example, be selected by the user in response to an image of a switch panel projected onto the screen 2 or an interactive game display.

To enable the screen co-ordinates of the touch location(s) to be determined, the system includes an infra-red radiation floodlight 3 which illuminates the back of the screen 2 with infra-red radiation, and an infra-red sensitive television camera 4 mounted behind the screen 2 so as to monitor the infra-red radiation reflected from the back of the screen 2. The infra-red camera 4 produces a signal representative of the monitored infra-red image (referred to hereinafter as the "monitored image") which is output to an image processor 5 which determines the screen co-ordinates of any point at which the screen is touched in a manner described below.

Without an object touching the screen 2, the reflected infra-red radiation picked up by the camera 4 will be the ambient background radiation reflected from the screen 2 as a whole. This "background image" is stored in the image processor and continually compared with the monitored image.

For much of the time the monitored image will correspond exactly with the background image. However, when the screen is touched (on the opposite side to the image projector 1, etc), using a finger or other suitable object, a local infra-red highlight will be produced due to the energy reflected from the finger/object touching the screen. This highlight will be picked up by the infra-red television camera 3 along with the background radiation. The monitored image containing the highlight is then processed by the image processor to obtain the screen co-ordinates of the point of contact of the touching finger/object (or objects).

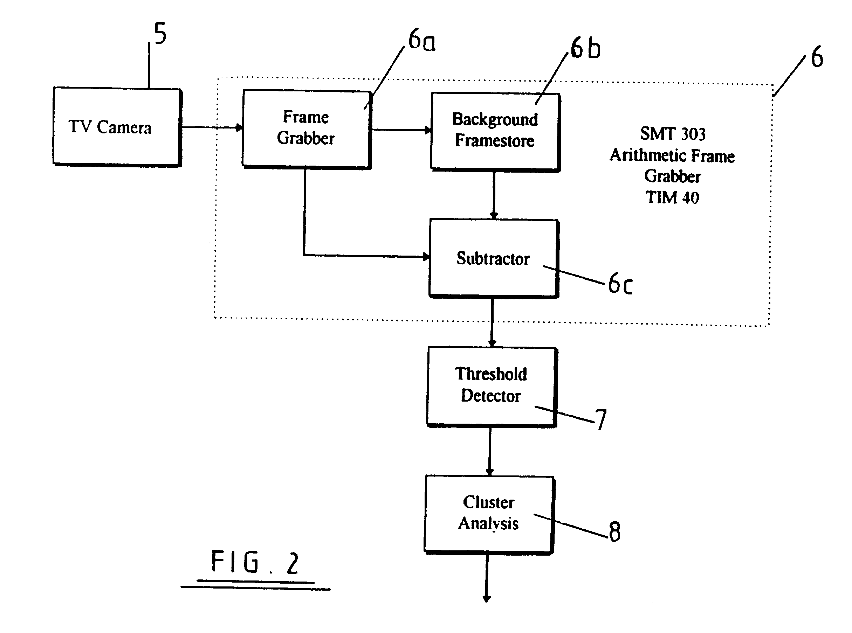

The components of the image processor 5 are schematically illustrated in the block diagram of Figure 2. The individual components are standard components and thus will not be described in detail. The monitored image signal output from the infra-red camera 4 is first passed to an arithmetic frame grabber 6 (model number SMT303 supplied by Kane Computing of 7 Theatre Court, London Road, Northwich, Cheshire CW9 5HB). The arithmetic frame grabber essentially comprises a frame grabber module 6a, a background frame store 6b (in which the "background image" is stored as mentioned above), and a subtractor 6c. The frame grabber 6a outputs a signal to both the subtractor 6c and the background frame store 6b, which itself outputs a signal to the subtractor 6c. The subtractor 6c substracts the background image from the monitored image (which will include any infra-red highlight resulting from touching of the screen) and the resultant signal is input to a threshold detector 7 (SMT309 Run Length Encoder supplied by Kane Computing).

The output signal from the threshold detector is input to a digital video interface 8 (model SMT308 supplied by Kane Computing) which functions as a cluster analysis circuit. The digital video interface performs region of interest calculations and outputs both the x and y screen co-ordinates of any local infra-red highlight in the monitored image and also the x and y widths of each highlight.

It will thus be seen that with the described system, incorporating conventional image processing components and techniques, it is possible to determine both the location and size of the point of contact of an object with the screen 2 and to discriminate multiple points of contact.

If desired, the signal output from the digital video interface 8 can be further processed to eliminate components of the signal corresponding to contacts below a minimum size (thereby ensuring that the infra-red highlight is a result of a positive contact with the screen by an object of a given order of size) and/or to eliminate signal components corresponding to infra-red highlights above a pre-determined size in order to disregard incidental contacts such as, for example, a hand being placed on the screen.

The signal output from the image processor can then be passed to the system c.p.u. (not illustrated), which controls the image projected onto the screen, and which can convert the known location of the or each point of touch contact with the screen into appropriate input data.

The system requires little calibration and drift should not be a problem. However, if necessary the stored background image can be updated to take account of any changes in the background radiation, for instance due to ageing of the infra-red source.

It will be appreciated that the described system will respond to a variety of objects used to touch the screen, including fingers (gloved or otherwise) and other forms of stylus.

It will also be understood by the appropriately skilled person, that the details of the image processor and image processing method may vary. The image processor described above is assembled using conventional components but it will be appreciated that other image processing methods and hardware may be used.

In addition, it will be appreciated that the details of the infra-red source, the image projector and the infra-red detector, (i.e. the television camera), could be varied. For instance, the image projector could also function as the infra-red radiation source so that the dedicated floodlight 3 is not required. Also, resolution could be increased by using more than one infra-red detector (eg camera).

Moreover, it will be appreciated that the method of determining the point of contact of an object with a screen in accordance with the present invention is not limited in application to back projection systems, or even to visual display systems.

## Claims

1. A method for determining the location of the or each point of contact of one or more objects with a first side of an at least partially transparent diffusing screen (2), the method comprising:
(i) illuminating the opposite side of the screen to said first side with radiation;
(ii) monitoring the radiation reflected from the screen and from any object placed in contact with said first side of the screen and producing a signal representative of the monitored image; and
(iii) processing said monitored image signal to determine the screen co-ordinates of the or each point of contact of an object with the screen.

2. A method according to claim 1, wherein the processing step (iii) includes the step of subtracting a representation of the background radiation reflected by the screen from the signal representative of the monitored image to derive a signal representative of localised highlights resulting from contact of the or each object with the screen.

3. A method according to claim 2, wherein the processing step (iii) further includes the step of thresholding the signal representative of detected highlights.

4. A method according to claim 3, wherein the processing step (iii) further includes performing region of interest calculations to determine both the screen co-ordinates and size of the or each point of contact of an object with the screen, and to discriminate between multiple points of contact.

5. A method according to any preceding claim, wherein said screen is part of a visual display system and said method forms part of a method for inputting data to the systems processor in response to touching said screen, the data input to the system processor being dependent on the location of the or each point at which the screen is touched.

6. A method according to claim 5, wherein the screen is a back projection diffusing screen.

7. A method according to any preceding claim, wherein the screen is illuminated with infra-red radiation.

8. A system for determining the point of contact of an object with a first side of an at least partially transparent diffusing screen (2), the system comprising a radiation source (3) for illuminating the opposite side of the screen to said first side, at least one radiation detecting means (4) for monitoring the radiation reflected from the screen and from any object placed in contact with said first side of the screen, and for producing a signal representative of the monitored image, and signal processing means (6-8) for processing the signal representative of the monitored image to determine the screen co-ordinates of the or each point of contact of an object with the screen.

9. A system according to claim 8, wherein the signal processing means is an image processor (6) which stores a background image of the background radiation reflected from the screen and subtracts this from the monitored image to produce a signal representative of monitored radiation highlights of reflected radiation from the or each object placed in contact with the screen.

10. A system according to claim 9, wherein the image processor includes thresholding circuitry (7).

11. A system according to claim 10, wherein the image processor includes cluster analysis circuitry (8) which receives a signal from the thresholding circuitry (7) and which produces a signal representative of the screen co-ordinates of the or each point of contact of an object with the screen.

12. A system according to claim 11, wherein the cluster analysis circuitry is adapted to determine the size of the or each point of contact of an object with the screen.

13. A system according to claim 11 or 12, wherein the signal output from the cluster analysis circuitry is input to further processing means which eliminates from the signal components representative of points of contact below a minimum size.

14. A system according to any one of claims 11 to 13, wherein the signal output from the cluster analysis circuitry is input to further processing means which eliminates from the signal components representative of points of contact above a pre-determined maximum size.

15. A system according to any one of claims 8 to 14, wherein the system is adapted for use in conjunction with a screen of a visual display system.

16. A system according to claim 15, wherein the system is adapted for use in conjunction with a back projection screen.

17. A visual display system, comprising a diffusion back projection screen, and a system according to any one of claims 8 to 16 for determining the screen co-ordinates of the or each point of contact of an object with the screen.

18. A visual display system according to claim 16, wherein the svstem includes an image projector (1) which also functions as the radiation source.

19. A visual display system according to any one of claims 17 to 18, wherein the radiation source is a source of infra-red radiation.

## Patentansprüche

1. Verfahren zum Bestimmen des Orts des bzw. jedes Kontaktpunkts eines bzw. mehrerer Objekte mit einer ersten Seite eines mindestens teilweise durchsichtigen Streuschirms (2), wobei das Verfahren folgendes umfaßt:
(i) das Beleuchten derjenigen Seite des Schirms, die der ersten Seite gegenüberliegt, mit Strahlung;
(ii) das Überwachen der Strahlung, die von dem Schirm und von jedem Objekt reflektiert wird, das in Kontakt mit der ersten Seite des Schirms gebracht wird, und das Erzeugen eines Signals, welches das überwachte Bild darstellt; und
(iii) das Verarbeiten des überwachten Bildsignals, um die Schirmkoordinaten des bzw. jedes Kontaktpunkts eines Objekts mit dem Schirm zu bestimmen.

2. Verfahren nach Anspruch 1, bei dem der Verarbeitungsschritt (iii) den Schritt des Subtrahierens einer Darstellung der Hintergrundstrahlung, die von dem Schirm reflektiert wird, von dem Signal umfaßt, welches das überwachte Bild darstellt, um ein Signal abzuleiten, das örtliche Hervorhebungen darstellt, die eine Folge eines Kontakts des bzw. jedes Objekts mit dem Schirm sind.

3. Verfahren nach Anspruch 2, bei dem der Verarbeitungsschritt (iii) ferner den Schritt der Schwellwertbildung des Signals umfaßt, das erfaßte Hervorhebungen darstellt.

4. Verfahren nach Anspruch 3, bei dem der Verarbeitungsschritt (iii) ferner das Ausführen von Berechnungen interessierender Bereiche umfaßt, um sowohl die Schirmkoordinaten als auch die Größe des bzw. jedes Kontaktpunkts eines Objekts mit dem Schirm zu bestimmen und um zwischen mehreren Kontaktpunkten zu unterscheiden.

5. Verfahren nach einem der vorhergehenden Ansprüche, bei dem der Schirm Teil eines Sichtanzeigesystems ist und das Verfahren Teil eines Verfahrens zum Eingeben von Daten in den Systemprozessor ansprechend auf ein Berühren des Schirms ist, wobei die Dateneingabe in den Systemprozessor von dem Ort des bzw. jedes Punkts abhängt, an dem der Schirm berührt wird.

6. Verfahren nach Anspruch 5, bei dem der Schirm ein Rückpro-Streuschirm ist.

7. Verfahren nach einem der vorhergehenden Ansprüche, bei dem der Schirm mit Infrarotstrahlung beleuchtet wird.

8. System zum Bestimmen des Kontaktpunkts eines Objekts mit einer ersten Seite eines mindestens teilweise durchsichtigen Streuschirms (2), wobei das System folgendes umfaßt: eine Strahlungsquelle (3) zum Beleuchten derjenigen Seite des Schirms, die der ersten Seite gegenüberliegt, mindestens ein Strahlungserfassungsmittel (4) zum Überwachen der Strahlung, die von dem Schirm und von jedem Objekt reflektiert wird, das in Kontakt mit der ersten Seite des Schirms gebracht wird, und zum Erzeugen eines Signals, welches das überwachte Bild darstellt, und Signalverarbeitungsmittel (6 - 8) zum Verarbeiten des Signals, welches das überwachte Bild darstellt, um die Schirmkoordinaten des bzw. jedes Kontaktpunkts eines Objekts mit dem Schirm zu bestimmen.

9. System nach Anspruch 8, bei dem das Signalverarbeitungsmittel ein Bildprozessor (6) ist, der ein Hintergrundbild der Hintergrundstrahlung speichert, die von dem Schirm reflektiert wird, und dieses von dem überwachten Bild subtrahiert, um ein Signal zu erzeugen, das überwachte Strahlungshervorhebungen reflektierter Strahlung von dem bzw. jedem Objekt darstellt, das in Kontakt mit dem Schirm gebracht wird.

10. System nach Anspruch 9, bei dem der Bildprozessor eine Schaltungsanordnung (7) zur Schwellwertbildung umfaßt.

11. System nach Anspruch 10, bei dem der Bildprozessor eine Schaltungsanordnung (8) zur Gruppenanalyse umfaßt, die ein Signal von der Schaltungsanordnung (7) zur Schwellwertbildung empfängt und die ein Signal erzeugt, das die Schirmkoordinaten des bzw. jedes Kontaktpunkts eines Objekts mit dem Schirm darstellt.

12. System nach Anspruch 11, bei dem die Schaltungsanordnung zur Gruppenanalyse dazu angepaßt ist, die Größe des bzw. jedes Kontaktpunkts eines Objekts mit dem Schirm zu bestimmen.

13. System nach Anspruch 11 oder 12, bei dem die Signalausgabe von der Schaltungsanordnung zur Gruppenanalyse in ein weiteres Verarbeitungsmittel eingegeben wird, das Komponenten von dem Signal eliminiert, die Kontaktpunkte unterhalb einer Mindestgröße darstellen.

14. System nach einem der Ansprüche 11 bis 13, bei dem die Signalausgabe von der Schaltungsanordnung zur Gruppenanalyse in ein weiteres Verarbeitungsmittel eingegeben wird, das Komponenten von dem Signal eliminiert, die Kontaktpunkte oberhalb einer vorgegebenen maximalen Größe darstellen.

15. System nach einem der Ansprüche 8 bis 14, bei dem das System zur Verwendung in Verbindung mit einem Schirm eines Sichtanzeigesystems angepaßt ist.

16. System nach Anspruch 15, bei dem das System zur Verwendung in Verbindung mit einem Rückproschirm angepaßt ist.

17. Sichtanzeigesystem, das einen Streurückproschirm und ein System nach einem der Ansprüche 8 bis 16 zum Bestimmen der Schirmkoordinaten des bzw. jedes Kontaktpunkts eines Objekts mit dem Schirm umfaßt.

18. Sichtanzeigesystem nach Anspruch 16, bei dem das System einen Bildprojektor (1) umfaßt, der auch als die Strahlungsquelle fungiert.

19. Sichtanzeigesystem nach einem der Ansprüche 17 bis 18, bei dem die Strahlungsquelle eine Quelle von Infrarotstrahlung ist.

## Revendications

1. Procédé pour déterminer l'endroit du ou de chaque point de contact d'un ou de plusieurs objets avec un premier côté d'un écran diffusant (2) au moins partiellement transparent, le procédé comprenant le fait de:
(i) éclairer avec un rayonnement le côté de l'écran opposé audit premier côté;
(ii) surveiller le rayonnement réfléchi par l'écran et par n'importe quel objet mis en contact avec ledit premier côté de l'écran et générer un signal représentatif de l'image surveillée; et
(iii) traiter ledit signal d'image surveillée pour déterminer les coordonnées d'écran du ou de chaque point de contact d'un objet avec l'écran.

2. Procédé selon la revendication 1, dans lequel l'étape de traitement (iii) englobe l'étape consistant à soustraire une représentation du rayonnement de fond réfléchi par l'écran du signal représentatif de l'image surveillée pour dériver un signal représentatif de surbrillances localisées résultant du contact de l'objet ou de chaque objet avec l'écran.

3. Procédé selon la revendication 2, dans lequel l'étape de traitement (iii) englobe en outre l'étape consistant à soumettre à un seuillage le signal représentatif de surbrillances détectées.

4. Procédé selon la revendication 3, dans lequel l'étape de traitement (iii) englobe en outre le fait de passer par une gamme de calculs d'intérêt pour déterminer à la fois les coordonnées d'écran et la dimension du ou de chaque point de contact d'un objet avec l'écran et pour établir une discrimination entre des points de contact multiples.

5. Procédé selon l'une quelconque des revendications précédentes, dans lequel ledit écran fait partie d'un système d'affichage visuel et ledit procédé fait partie d'un procédé pour entrer des données dans le processeur du système en réponse au fait de toucher ledit écran, l'entrée de données dans le processeur du système dépendant de l'endroit du ou de chaque point auquel l'écran est touché.

6. Procédé selon la revendication 5, dans lequel l'écran est un écran diffusant pour rétroprojection.

7. Procédé selon l'une quelconque des revendications précédentes, dans lequel l'écran est éclairé avec un rayonnement infrarouge.

8. Système pour déterminer le point de contact d'un objet avec un premier côté d'un écran diffusant (2) au moins partiellement transparent, le système comprenant une source de rayonnement (3) pour éclairer le côté de l'écran opposé audit premier côté, au moins un moyen de détection de rayonnement (4) pour surveiller le rayonnement réfléchi par l'écran et par n'importe quel objet mis en contact avec ledit premier côté de l'écran et pour générer un signal représentatif de l'image surveillée, ainsi qu'un moyen de traitement de signal (6-8) pour traiter le signal représentatif de l'image surveillée dans le but de déterminer les coordonnées d'écran du ou de chaque point de contact d'un objet avec l'écran.

9. Système selon la revendication 8, dans lequel le moyen de traitement de signal est un processeur d'image (6) qui mémorise une image de fond du rayonnement de fond réfléchi par l'écran et qui la soustrait de l'image surveillée dans le but de générer un signal représentatif de surbrillances surveillées du rayonnement réfléchi par l'objet ou par chaque objet placé mis en contact avec l'écran.

10. Système selon la revendication 9, dans lequel le processeur d'image englobe une circuiterie de seuillage (7).

11. Système selon la revendication 10, dans lequel le processeur d'image englobe une circuiterie d'analyse par grappes (8) qui reçoit un signal émis par les éléments (7) composant un circuit de seuillage et qui génère un signal représentatif des coordonnées d'écran du point ou de chaque point de contact d'un objet avec l'écran.

12. Système selon la revendication 11, dans lequel la circuiterie d'analyse par grappes est conçue pour déterminer la dimension du point ou de chaque point de contact d'un objet avec l'écran.

13. Système selon la revendication 11 ou 12, dans lequel le signal émis par la circuiterie d'analyse par grappes est entré dans un moyen de traitement supplémentaire qui élimine du signal des composantes représentatives de points de contact dont la dimension est inférieure à une dimension minimale.

14. Système selon l'une quelconque des revendications 11 à 13, dans lequel le signal émis par la circuiterie d'analyse par grappes est entré dans un moyen de traitement supplémentaire qui élimine du signal des composantes représentatives de points de contact dont la dimension est supérieure à une dimension maximale prédéterminée.

15. Système selon l'une quelconque des revendications 8 à 14, dans lequel le système est conçu pour être utilisé de manière conjointe avec un écran d'un système d'affichage visuel.

16. Système selon la revendication 15, dans lequel le système est conçu pour être utilisé de manière conjointe avec un écran pour rétroprojection.

17. Système d'affichage visuel comprenant un écran diffusant pour rétroprojection et un système selon l'une quelconque des revendications 8 à 16 pour déterminer les coordonnées d'écran du point ou de chaque point de contact d'un objet avec l'écran.

18. Système d'affichage visuel selon la revendication 16, dans lequel le système englobe un projecteur d'image (1) qui fait également office de source de rayonnement.

19. Système d'affichage visuel selon l'une quelconque des revendications 17 à 18, dans lequel la source de rayonnement est une source de rayonnement infrarouge.
